(19) Europäisches Patentamt / European Patent Office / Office européen des brevets

(11) **EP 2 592 257 A1**

(12) **EUROPEAN PATENT APPLICATION**
published in accordance with Art. 153(4) EPC

(43) Date of publication:
**15.05.2013 Bulletin 2013/20**

(51) Int Cl.:
**F02D 45/00** (2006.01)

(21) Application number: **10852892.8**

(22) Date of filing: **11.06.2010**

(86) International application number:
**PCT/JP2010/059919**

(87) International publication number:
**WO 2011/155054 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **TOYOTA JIDOSHA KABUSHIKI KAISHA**
**Toyota-shi,**
**Aichi-ken, 471-8571 (JP)**

(72) Inventors:
• **KORENAGA, Shingo**
**Toyota-shi**
**Aichi 471-8571 (JP)**

• **ONODERA, Chiharu**
**Toyota-shi**
**Aichi 471-8571 (JP)**
• **IWAMI, Youzou**
**Toyota-shi**
**Aichi 471-8571 (JP)**

(74) Representative: **Smith, Samuel Leonard**
**J A Kemp**
**14 South Square**
**Gray's Inn**
**London WC1R 5JJ (GB)**

(54) **CONTROL DEVICE FOR INTERNAL COMBUSTION ENGINE**

(57)     A control apparatus for an internal combustion engine is provided that can correct a shift in an output value of an in-cylinder pressure sensor that occurs for a predetermined time period after occurrence of abnormal combustion.

Solution

A pre-occurrence output characteristic (60) indicating a relationship between in-cylinder pressure and an actual sensor output value of the in-cylinder pressure sensor (14) in a pre-occurrence cycle before occurrence of abnormal combustion is previously stored. Estimated in-cylinder pressure in a post-occurrence cycle after occurrence of abnormal combustion is acquired (S 131, S 134). A post-occurrence output characteristic (62) is calculated from the estimated in-cylinder pressure and the sensor output value in the post-occurrence cycle. A difference between outputs (64) of the in-cylinder pressure sensor (14) before and after occurrence of the abnormal combustion is calculated from the pre-occurrence output characteristic (60) and the post-occurrence output characteristic (62) (S138). The sensor output value in the post-occurrence cycle is calibrated using the difference between outputs (64) (S 140).

Figure 3

## Description

Technical Field

The present invention relates to a control apparatus for an internal combustion engine, and more particularly to a control apparatus for an internal combustion engine suitable for controlling an internal combustion engine mounted in a vehicle.

Background Art

Conventionally, an internal combustion engine including an in-cylinder pressure sensor in each cylinder is known, for example, as disclosed in Patent Literature 1. Patent Literature 1 discloses a control apparatus for an internal combustion engine that corrects an output characteristic of the in-cylinder pressure sensor in each cylinder (a characteristic indicating a relationship between in-cylinder pressure and a sensor output) so as to match a common reference output characteristic. As the reference output characteristic, an average of output characteristics of in-cylinder pressure sensors or an output characteristic of any one of the in-cylinder pressure sensors is used. Such a method can make a correction to eliminate variations in output characteristic of the in-cylinder pressure sensors in the cylinders.

Citation List

Patent Literature

Patent Literature 1: Japanese Patent Laid-Open No. 2008-69714
Patent Literature 2: Japanese Patent Laid-Open No. 2007-32531
Patent Literature 3: Japanese Patent Laid-Open No. 2008-297952
Patent Literature 4: Japanese Patent Laid-Open No. 2009-229328

Summary of Invention

Technical Problem

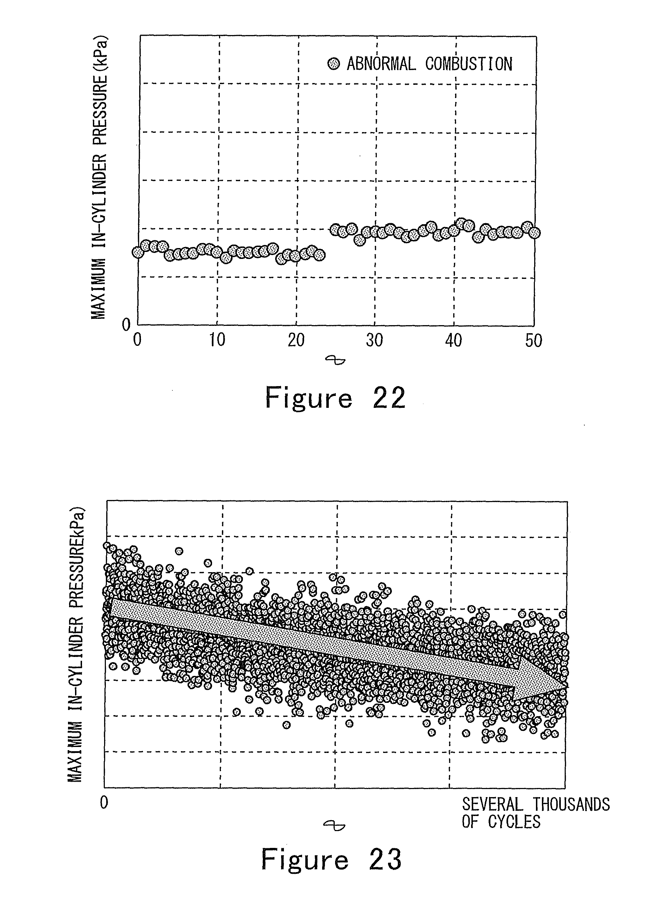

The present inventor has diligently studied and found that occurrence of abnormal combustion causes a phenomenon described below in the in-cylinder pressure sensor. Figure 22 illustrates a shift in an output value (change in an output characteristic) of the in-cylinder pressure sensor before and after occurrence of abnormal combustion. Figure 23 shows an output value of the in-cylinder pressure sensor in a cycle after occurrence of abnormal combustion. As shown in Figure 22, when abnormal combustion occurs, then a shift occurs in an output value of the in-cylinder pressure sensor. It has been found that the output shift continues until a predetermined time period (several thousands to several tens of thousands of cycles) passes (Figure 23).

As such, a shift occurs in the output value of the in-cylinder pressure sensor for a predetermined time period after occurrence of abnormal combustion. The conventional control apparatus for an internal combustion engine does not consider this phenomenon, and a correct output value corresponding to actual in-cylinder pressure cannot be obtained in the time period. Thus, various kinds of control (for example, ignition timing control, air/fuel ratio feedback control) based on the output value of the in-cylinder pressure sensor cannot be properly performed in the time period.

The present invention, which has been made to solve the above described problem, has an object to provide a control apparatus for an internal combustion engine that can correct a shift in an output value of an in-cylinder pressure sensor that occurs for a predetermined time period after occurrence of abnormal combustion.

Solution to Problem

To achieve the above described object, A first aspect of the present invention provides a control apparatus for an internal combustion engine including an in-cylinder pressure sensor, including: abnormal combustion determination means for determining whether abnormal combustion occurs that increases in-cylinder pressure to a set value or higher; pre-occurrence output characteristic storage means for previously storing a pre-occurrence output characteristic indicating a relationship between in-cylinder pressure and an actual output value of the in-cylinder pressure sensor (hereinafter referred to as a sensor output value) in a cycle before occurrence of the abnormal combustion (hereinafter referred to as a pre-occurrence cycle); estimated in-cylinder pressure acquiring means for acquiring estimated in-cylinder pressure in a cycle after occurrence of the abnormal combustion (hereinafter referred to as a post-occurrence cycle); post-occurrence output characteristic calculation means for calculating a post-occurrence output characteristic from the estimated in-cylinder pressure and the sensor output value in the post-occurrence cycle; and sensor output value calibration means for calculating a difference between outputs of the in-cylinder pressure sensor before and after occurrence of the abnormal combustion from the pre-occurrence output characteristic and the post-occurrence output characteristic, and calibrating the sensor output value in the post-occurrence cycle using the difference between outputs.

A second aspect of the present invention has a feature in the first aspect wherein the estimated in-cylinder pressure acquiring means further includes maximum in-cylinder pressure storage means for acquiring, in each cycle, maximum in-cylinder pressure according to a maximum sensor output value from the pre-occurrence output characteristic and storing the pressure, and stationary time estimated in-cylinder pressure acquiring means for acquiring the maximum in-cylinder pressure in the pre-occurrence cycle stored in the maximum in-cylinder pressure storage means as the estimated in-cylinder pressure in the post-occurrence cycle when an operation state is constant before and after occurrence of the abnormal combustion.

The third aspect of the present invention has a feature in the first or second aspects wherein the estimated in-cylinder pressure acquiring means further includes relationship storage means for previously storing a correspondence relationship between the operation state and estimated maximum in-cylinder pressure, and transient time estimated in-cylinder pressure acquiring means for acquiring, from the correspondence relationship, estimated maximum in-cylinder pressure corresponding to the operation state in the post-occurrence cycle as the estimated in-cylinder pressure in the post-occurrence cycle.

A fourth aspect of the present invention has a feature in the second or third aspects wherein the estimated in-cylinder pressure acquiring means further includes low pressure time estimated in-cylinder pressure acquiring means for acquiring in-cylinder pressure calculated using an expression of adiabatic compression in a compression stroke as the estimated in-cylinder pressure in the post-occurrence cycle, and the post-occurrence output characteristic calculation means calculates the post-occurrence output characteristic from one or more pieces of data associating the estimated in-cylinder pressure with the sensor output value in the post-occurrence cycle.

A fifth aspect of the present invention has a feature in any one of the first to fourth aspects wherein the control apparatus further includes a knock control system that determines occurrence of knocking when an amplitude of a vibration sensor is equal to or larger than a knock determination value in a knocking determination time period after ignition, and the knock control system further includes abnormal combustion determination section adding means for adding an abnormal combustion determination section including a crank angle at which the abnormal combustion occurs when the abnormal combustion occurs before ignition.

Advantageous Effects of Invention

According to the first aspect, the difference between outputs of the in-cylinder pressure sensor before and after occurrence of abnormal combustion can be calculated from the pre-occurrence output characteristic and the post-occurrence output characteristic, and the sensor output value in the post-occurrence cycle can be calibrated using the difference between outputs. Thus, according to the present invention, a shift in the output value of the in-cylinder pressure sensor that occurs for a predetermined time period after occurrence of abnormal combustion can be corrected. Various kinds of control based on the output value of the in-cylinder pressure sensor can be performed, thereby preventing a reduction in fuel efficiency and drivability.

According to the second aspect, the maximum in-cylinder pressure in the pre-occurrence cycle is stored. Then, when the operation state is constant before and after occurrence of abnormal combustion, the maximum in-cylinder pressure stored in the pre-occurrence cycle can be acquired as the estimated in-cylinder pressure in the post-occurrence cycle. Thus, according to the present invention, when the operation state is constant before and after occurrence of abnormal combustion, the above described post-occurrence output characteristic can be calculated with high accuracy from the estimated in-cylinder pressure and the sensor output value in the post-occurrence cycle.

According to the third aspect, the estimated maximum in-cylinder pressure corresponding to the operation state in the post-occurrence cycle can be acquired as the estimated in-cylinder pressure in the post-occurrence cycle from the correspondence relationship between the operation state and the estimated maximum in-cylinder pressure. Thus, according to the present invention, the above described post-occurrence output characteristic can be calculated with high accuracy even in a transient time.

According to the fourth aspect, the in-cylinder pressure calculated using the expression of adiabatic compression in the compression stroke can be further acquired as the estimated in-cylinder pressure in the post-occurrence cycle. Thus, data relating to estimated in-cylinder pressure before ignition can be obtained. Thus, according to the present invention, the above described post-occurrence output characteristic can be calculated with higher accuracy.

According to the fifth aspect, the abnormal combustion determination section including the crank angle at which the abnormal combustion occurs can be added when the abnormal combustion occurs before ignition. The abnormal combustion determination section is provided to allow occurrence of abnormal combustion to be detected irrespective of the output value of the in-cylinder pressure sensor. Thus, according to the present invention, occurrence of abnormal combustion can be detected even in a time period when a shift occurs in the output value of the in-cylinder pressure sensor after occurrence of abnormal combustion.

Brief Description of Drawings

[Figure 1] Figure 1 illustrates positions of embodiments of the present invention.
[Figure 2] Figure 2 is a schematic configuration diagram for illustrating a system configuration in Embodiment 1 of the present invention.

[Figure 3] Figure 3 illustrates control to correct a shift in an output value caused by a difference 58 in inclination in Embodiment 1 of the present invention.

[Figure 4] Figure 4 illustrates a relationship between in-cylinder pressure and a crank angle in a compression stroke in Embodiment 1 of the present invention.

[Figure 5] Figure 5 is a flowchart of a control routine executed by an ECU 50 in Embodiment 1 of the present invention.

[Figure 6] Figure 6 illustrates an example of determining abnormal combustion in Embodiment 1 of the present invention.

[Figure 7] Figure 7 illustrates an example of determining whether abnormality occurs in an in-cylinder pressure sensor 14 in Embodiment 1 of the present invention.

[Figure 8] Figure 8 is a flowchart of a sub-routine executed by the ECU 50 in Embodiment 1 of the present invention.

[Figure 9] Figure 9 shows a relationship between an engine rpm NE and a load rate KL in a transient time in Embodiment 2 of the present invention.

[Figure 10] Figure 10 is a relationship map showing a relationship between the load rate KL, ignition timing SA, and maximum in-cylinder pressure Pmax for each engine rpm NE in Embodiment 2 of the present invention.

[Figure 11] Figure 11 shows a change in the maximum in-cylinder pressure Pmax when the ignition timing SA and the load rate KL are changed in Embodiment 2 of the present invention.

[Figure 12] Figure 12 illustrates control to correct a shift in an output value caused by a difference 58 in inclination in Embodiment 2 of the present invention.

[Figure 13] Figure 13 is a flowchart of a control routine executed by an ECU 50 in Embodiment 2 of the present invention.

[Figure 14] Figure 14 is a flowchart of a sub-routine executed by the ECU 50 in Embodiment 2 of the present invention.

[Figure 15] Figure 15 illustrates a knock control system (KCS) used in Embodiment 3 of the present invention.

[Figure 16] Figure 16 shows a relationship between a heat generation position and maximum in-cylinder pressure Pmax in Embodiment 3 of the present invention.

[Figure 17] Figure 17 is a flowchart of a control routine executed by an ECU 50 in Embodiment 3 of the present invention.

[Figure 18] Figure 18 illustrates a relationship between an actual value of in-cylinder pressure and an estimated value of in-cylinder pressure in Embodiment 4 of the present invention.

[Figure 19] Figure 19 shows an error between an average value of actual values and an estimated value of in-cylinder pressure in different numbers of detections (numbers of cycles) in Embodiment 4 of the present invention.

[Figure 20] Figure 20 shows a deviation rate between an actual value and an estimated value of in-cylinder pressure according to the number of detections in Embodiment 4 of the present invention.

[Figure 21] Figure 21 is a flowchart of a control routine executed by an ECU 50 in Embodiment 4 of the present invention.

[Figure 22] Figure 22 illustrates a shift in an output value (a change in an output characteristic) of an in-cylinder pressure sensor before and after occurrence of abnormal combustion.

[Figure 23] Figure 23 shows an output value of the in-cylinder pressure sensor in a cycle after occurrence of abnormal combustion.

[Figure 24] Figure 24 illustrates a first element that causes a shift in an output value.

[Figure 25] Figure 25 illustrates a second element that causes a shift in an output value.

Reference Signs List

| | |
|---|---|
| 10 | engine |
| 14 | in-cylinder pressure sensor |
| 16 | ignition plug |
| 22 | air flow meter |
| 24 | supercharger |
| 24a | compressor |
| 24b | turbine |
| 26 | intercooler |
| 28 | throttle valve |
| 31 | intake pipe pressure sensor |
| 34 | crank angle sensor |
| 36 | knock sensor |
| 50 | ECU (Electronic Control Unit) |
| 52 | offset |
| 58 | difference in inclination |
| 60 | output characteristic before occurrence of abnormal combustion |
| 62 | output characteristic after occurrence of abnormal combustion |
| 64 | output correction amount |
| 70 | knocking determination section |
| 72 | abnormal combustion determination section |
| Pmax | maximum in-cylinder pressure |

Description of Embodiments

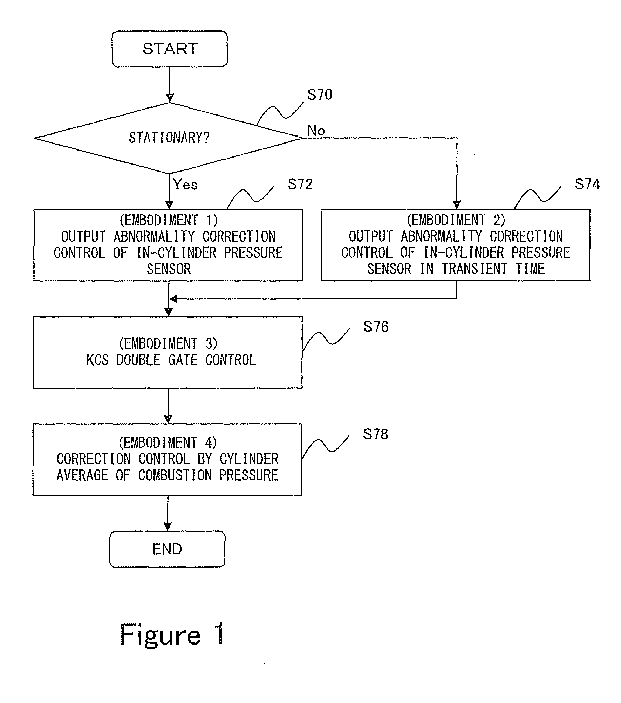

First, with reference to Figure 1, positions of embodiments of the present invention will be described. Figure 1 illustrates positions of embodiments of the present invention. Embodiments 1 and 2 of the present invention correct a shift in an output value of an in-cylinder pressure sensor that occurs for a predetermined time period after occurrence of abnormal combustion. In particular, Embodiment 1 is suitable in a stationary time, and Embodiment 2 is suitable in a transient time. Embodiment 3 detects abnormal combustion that occurs during correction control by Embodiments 1 and 2 using a KCS (Knock Control System). Further, Embodiment 4 replaces correction by Embodiments 1 and 2.

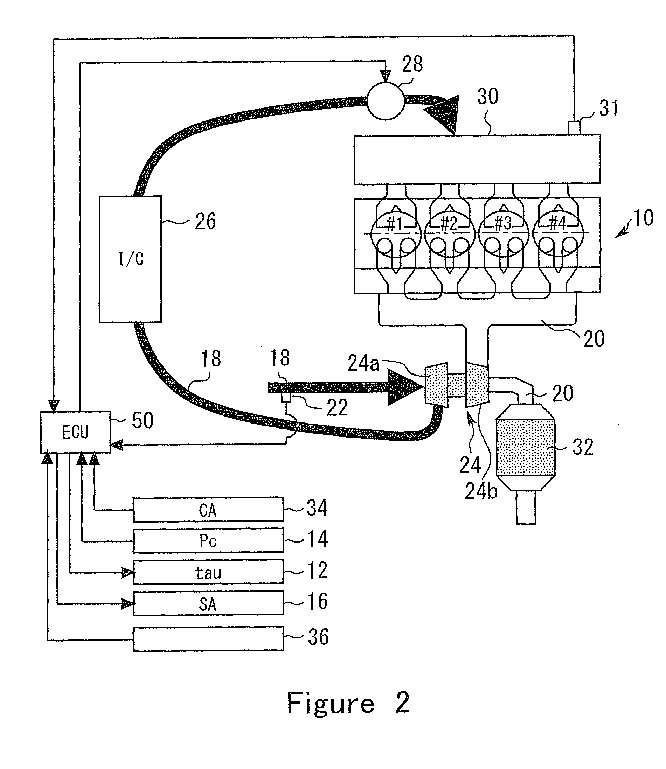

Now, with reference to Figures 2 to 25, embodiments of the present invention will be described in detail. In the drawings, common components are denoted by the same reference numerals, and overlapping descriptions will be omitted.

Embodiment 1

{System Configuration in Embodiment 1}

First, with reference to Figures 2 to 8, Embodiment 1 of the present invention will be described. Figure 2 is a schematic configuration diagram for illustrating a system configuration in Embodiment 1 of the present invention. The system in Figure 2 includes an internal combustion engine (hereinafter simply referred to as an engine) 10. The internal combustion engine 10 in Figure 2 is of an in-line four-cylinder type, but the number of cylinders and arrangement of the cylinders are not limited thereto in the present invention.

To each cylinder of the engine 10, an injector 12 that directly injects fuel into the cylinder, an in-cylinder pressure sensor 14 for detecting in-cylinder pressure (combustion pressure), and an ignition plug 16 are mounted. The present invention may be applied to a port-injection engine, not limited to the cylinder direct-injection engine as described above.

An intake passage 18 and an exhaust passage 20 are connected to each cylinder. An air cleaner is mounted near an inlet of the intake passage 18. An air flow meter 22 for detecting an intake air amount GA is mounted downstream of the air cleaner.

A supercharger 24 is provided downstream of the air flow meter 22. The supercharger 24 includes a compressor 24a and a turbine 24b. The compressor 24a and the turbine 24b are integrally coupled by a coupling shaft. The compressor 24a is rotationally driven by exhaust energy of an exhaust gas input to the turbine 24b.

An intercooler 26 for cooling fresh air compressed by the compressor 24a is provided downstream of the compressor 24a. A throttle valve 28 is provided downstream of the intercooler 26. A surge tank 30 is provided in the intake passage 18 downstream of the throttle valve 28. An intake pipe pressure sensor 31 for detecting intake pipe pressure is provided near the surge tank 30. The intake passage 18 downstream of the surge tank 30 branches and is connected to each cylinder.

The turbine 24b of the supercharger 24 is provided in the exhaust passage 20. A catalyst 32 is provided downstream of the turbine 24b. As the catalyst 32, for example, a three-way catalyst is used.

The system in this embodiment further includes an ECU (Electronic Control Unit). To an input portion of the ECU 50, various sensors such as the in-cylinder pressure sensor 14, the air flow meter 22, and the intake pipe pressure sensor 31 described above, and also a crank angle sensor 34 for detecting a crank angle CA are connected. To an output portion of the ECU 50, various actuators such as the injector 12, the ignition plug 16, and the throttle valve 28 described above are connected.

The ECU 50 actuates the actuators according to a predetermined program based on an output from the sensors to control an operation state of the engine 10. The ECU 50 can calculate an engine rpm NE and an in-cylinder volume V from the crank angle CA.

[Characteristic Control in Embodiment 1]

Next, problems in the above described system will be described, and characteristic control in this embodiment to solve the problems will be described. In the above described system, when abnormal combustion such as pre-ignition occurs and in-cylinder pressure reaches high pressure of a set value or higher, a shift then occurs in an output value of the in-cylinder pressure sensor 14 (Figure 22). The shift in the output value continues until several thousands to several tens of thousands of cycles pass (Figure 23). A correct output value according to actual in-cylinder pressure cannot be obtained in the time period. Thus, various kinds of control (for example, ignition timing control, air/fuel ratio feedback control) based on the output value of the in-cylinder pressure sensor 14 cannot be properly performed in the time period.

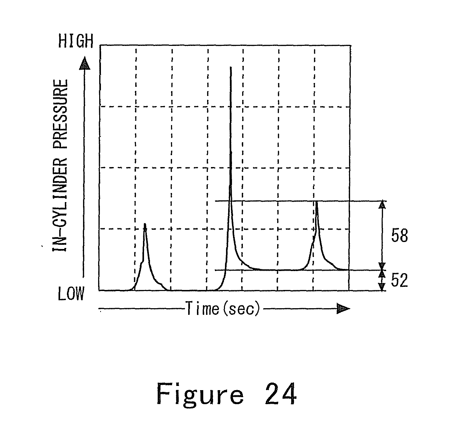

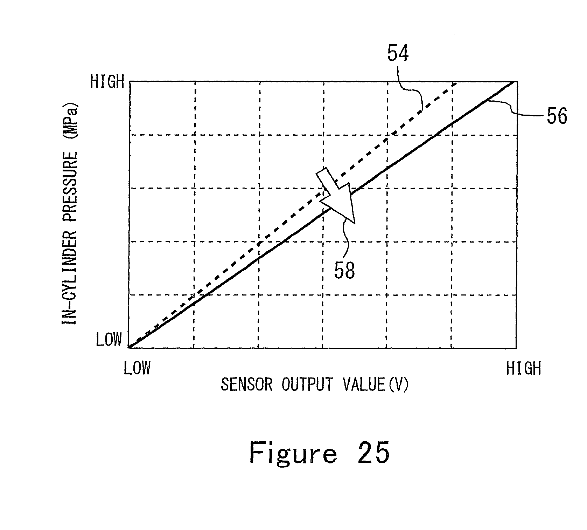

Next, two elements that cause a shift in an output value of the in-cylinder pressure sensor 14 will be described. Figure 24 illustrates a first element that causes a shift in an output value. The first element is an offset 52 before and after occurrence of abnormal combustion. Figure 25 illustrates a second element that causes a shift in an output value. A broken line 54 shows an output characteristic of the in-cylinder pressure sensor 14 (a relationship indicating an output value output by the in-cylinder pressure sensor 14 with respect to the in-cylinder pressure) in a cycle before occurrence of abnormal combustion. Meanwhile, a solid line 56 shows an output characteristic in a cycle after occurrence of abnormal combustion. The second element is a difference 58 in inclination between output characteristics before and after occurrence of abnormal combustion shown by the broken line 54 and the solid line 56.

It is desirable that even in the cycle after occurrence of abnormal combustion, the shift in the output value caused by the offset 52 and the difference 58 in inclination are properly corrected and calibrated to an output value of the in-cylinder pressure sensor 14 before occurrence of abnormal combustion.

Thus, in the system of this embodiment, for the shift in the output value caused by the offset 52, intake pipe pressure detected by the intake pipe pressure sensor 31 at a bottom dead center in an intake stroke is considered as in-cylinder pressure at the bottom dead center, and a difference between the intake pipe pressure and in-cylinder pressure detected by the in-cylinder pressure sensor 14 is corrected. The shift in the output value caused by the difference 58 in inclination is corrected by characteristic control described below.

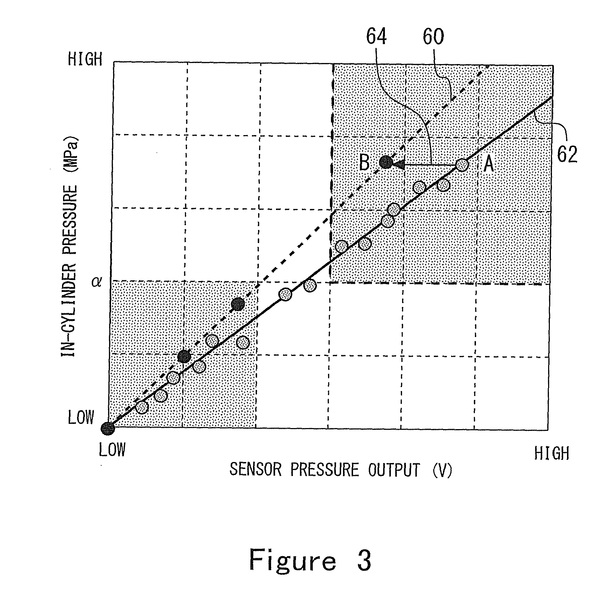

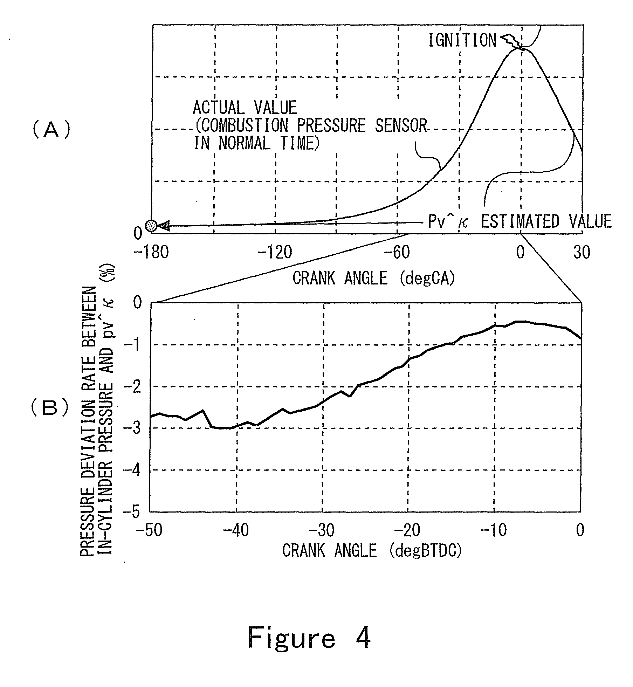

With reference to Figures 3 and 4, an outline of the characteristic control in this embodiment will be described. Figure 3 illustrates control to correct the shift in the output value caused by the difference 58 in inclination. A broken line 60 shows an output characteristic indicating a relationship between in-cylinder pressure in a cycle before occurrence of abnormal combustion and an output value of the in-cylinder pressure sensor 14. The cycle before occurrence of abnormal combustion is hereinafter simply referred to as "abnormal combustion pre-occurrence cycle." The broken line 60 is referred to as "output characteristic 60 before occurrence of abnormal combustion." The output characteristic 60 before occurrence of abnormal combustion is, for example, a normal output characteristic of a new sensor. The output characteristic 60 before occurrence of abnormal combustion is previously stored in the ECU 50.

A solid line 62 in Figure 3 shows an output characteristic indicating a relationship between estimated in-cylinder pressure in a cycle after occurrence of abnormal combustion and an output value of the in-cylinder pressure sensor 14. The cycle after occurrence of abnormal combustion is hereinafter simply referred to as "abnormal combustion post-occurrence cycle." The solid line 62 is referred to as "output characteristic 62 after occurrence of abnormal combustion." A calculation method of the output characteristic 62 after occurrence of abnormal combustion will be described later.

A difference between outputs of the in-cylinder pressure sensor 14 before and after occurrence of the abnormal combustion is calculated from the output characteristic 60 before occurrence of abnormal combustion and the output characteristic 62 after occurrence of abnormal combustion. The output value of the in-cylinder pressure sensor 14 in the abnormal combustion post-occurrence cycle can be calibrated using the difference between the outputs.

{Calculation Method of Output Characteristic 62 after Occurrence of Abnormal Combustion}

The calculation method of the output characteristic 62 after occurrence of abnormal combustion will be described. To calculate the output characteristic 62 after occurrence of abnormal combustion, estimated in-cylinder pressure in the abnormal combustion post-occurrence cycle is first calculated. Then, data associating the estimated in-cylinder pressure with an actual output value of the in-cylinder pressure sensor 14 is stored in a relationship map in Figure 3. The output characteristic 62 after occurrence of abnormal combustion can be calculated from one or more pieces of data stored in the relationship map. The actual output value of the in-cylinder pressure sensor 14 increases substantially in proportion to the in-cylinder pressure, and thus the output characteristic 62 after occurrence of abnormal combustion is represented by a linear function. The output characteristic 62 after occurrence of abnormal combustion is corrected as described above according to the offset 52.

{Calculation of Estimated In-cylinder Pressure after Occurrence of Abnormal Combustion: Low Pressure Region}

In the system of this embodiment, a method of calculating estimated in-cylinder pressure in the abnormal combustion post-occurrence cycle differs between before and after ignition. Thus, a method of calculating estimated in-cylinder pressure in a low pressure region before ignition will be first described. The low pressure region is a region lower than a threshold $\alpha$ in Figure 3. The threshold $\alpha$ is, for example, in-cylinder pressure near a compression top dead center before ignition.

In the low pressure region before ignition, in-cylinder pressure is calculated considering that an expression (1) of adiabatic compression is satisfied in a compression stroke. In the expression (1), P is in-cylinder pressure, V is in-cylinder volume, and $\kappa$ is a polytropic index (for example, $\kappa = 1.32$).

$$PV^\kappa = \mathrm{const} \dots (1)$$

With reference to Figure 4, specific descriptions will be made. Figure 4 illustrates a relationship between the in-cylinder pressure and a crank angle in the compression stroke. A graph (A) in Figure 4 shows a relationship between an estimated value of in-cylinder pressure calculated based on the expression (1) and an actual value of in-cylinder pressure in a normal combustion cycle. A graph (B) in Figure 4 shows a deviation rate between the estimated value of in-cylinder pressure calculated based on the expression (1) and the actual value of in-cylinder pressure in the normal combustion cycle. The normal combustion cycle is a cycle in which an air-fuel mixture in the cylinder is ignited by the ignition plug 16, flame sequentially spreads from near the ignition plug 16, and favorable combustion is performed.

The estimated value of in-cylinder pressure in the graph (A) in Figure 4 is calculated for each crank angle CA by assuming intake pipe pressure at the bottom dead center in the intake stroke as in-cylinder pressure $P_0$ at the bottom dead center, and assigning the in-cylinder pressure $P_0$ and an in-cylinder volume $V_0$ at the bottom dead center to the expression (1). As shown in the graph (A) in Figure 4, the estimated value and the actual value of in-cylinder pressure from the bottom dead center to the ignition timing in the intake stroke are substantially equal in the normal combustion cycle. Specifically, as shown in the graph (B) in Figure 4, the deviation rate between the estimated value and the actual value of in-cylinder pressure is within 3%, and high accuracy is obtained in the normal combustion cycle.

Thus, in the system of this embodiment, the estimated in-cylinder pressure in the abnormal combustion post-occurrence cycle can be calculated with high accuracy using the expression (1) in the low pressure region before ignition. Then, data associating the estimated in-cylinder pressure with the output value of the in-cylinder pressure sensor 14 at the crank angle CA at which the estimated in-cylinder pressure is calculated is stored in the relationship map in Figure 3.

{Calculation of Estimated In-cylinder Pressure after Occurrence of Abnormal Combustion: High Pressure Region}

However, the data thus stored is based on only the low pressure region with a narrow range of use. In the system of this embodiment, data on a high pressure region as an actual range of use is also obtained to calculate the output characteristic 62 after occurrence of abnormal combustion with high accuracy.

Thus, a method of calculating estimated in-cylinder pressure in the high pressure region after ignition will be next described. In this embodiment, an operation state is constant (stationary time with a constant intake air amount GA) before and after occurrence of abnormal combustion.

In the high pressure region, an average value of the maximum in-cylinder pressure Pmax in the abnormal combustion pre-occurrence cycle is used as estimated in-cylinder pressure in the abnormal combustion post-occurrence cycle. As described above, since the operation state is constant before and after occurrence of abnormal combustion, it can be considered that the maximum in-cylinder pressure Pmax does not change before and after occurrence of abnormal combustion.

Also for a maximum output value of the in-cylinder pressure sensor 14 in the abnormal combustion post-occurrence cycle, an average value in a predetermined number of cycles is used. Then, data associating the estimated in-cylinder pressure (the average value of the maximum in-cylinder pressure Pmax) with the average value of the maximum output value is stored in the relationship map in Figure 3. The average value in a predetermined number of cycles can be used to reduce variations in detection values caused by various factors (for example variations in efficiency of the intercooler 26) to increase accuracy.

Then, the output characteristic 62 after occurrence of abnormal combustion is calculated from the data on the low pressure region and the data on the high pressure region stored in the relationship map in Figure 3. The output characteristic 62 after occurrence of abnormal combustion is represented by, for example, an approximate line of a linear function.

A difference between outputs of the in-cylinder pressure sensor 14 before and after occurrence of abnormal combustion can be calculated from the output characteristic 60 before occurrence of abnormal combustion and the output characteristic 62 after occurrence of abnormal combustion. The difference between outputs can be used as an output correction amount 64 (Figure 3) to calibrate an output value A (Figure 3) of the in-cylinder pressure sensor 14 in the abnormal combustion post-occurrence cycle to an output value B (Figure 3) of the in-cylinder pressure sensor 14 in the abnormal combustion pre-occurrence cycle.

As such, when the operation state is constant before and after occurrence of abnormal combustion, the output characteristic 62 after occurrence of abnormal combustion can be calculated with high accuracy. Thus, in the system of this embodiment, the shift in the output value of the in-cylinder pressure sensor 14 caused by abnormal combustion can be corrected from the output characteristic 60 before occurrence of abnormal combustion and the output characteristic 62 after occurrence of abnormal combustion.

{Control Routine}

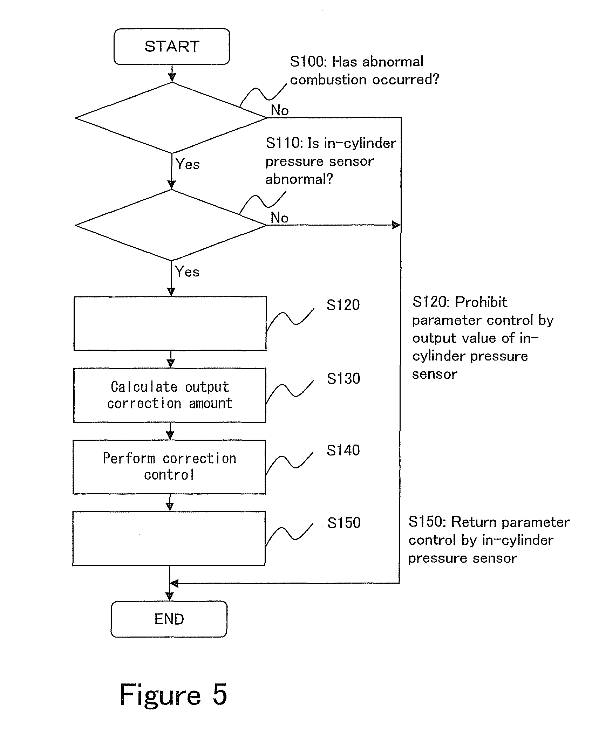

Figure 5 is a flowchart of a control routine executed by the ECU 50 in order to achieve the above described operation. This routine is executed when the operation state is constant before and after occurrence of abnormal combustion (Step S70 in Figure 1).

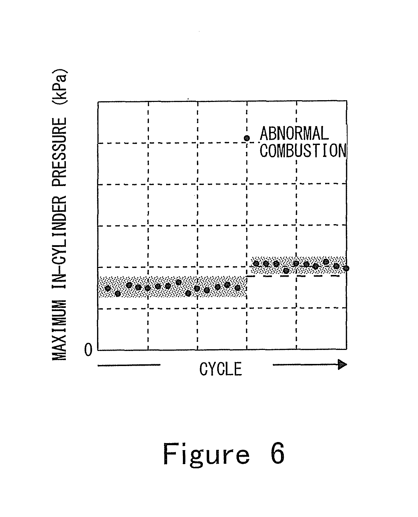

In the main routine in Figure 5, first in Step S100, the ECU 50 determines whether abnormal combustion has occurred. For example, determination is made as described below. Figure 6 illustrates an example of determining abnormal combustion. The ECU 50 determines that abnormal combustion has occurred when the output value of the in-cylinder pressure sensor 14 exceeds by $3\sigma$ a reference value according to the crank angle CA. When it is determined that abnormal combustion has not occurred, then processes in this routine are finished.

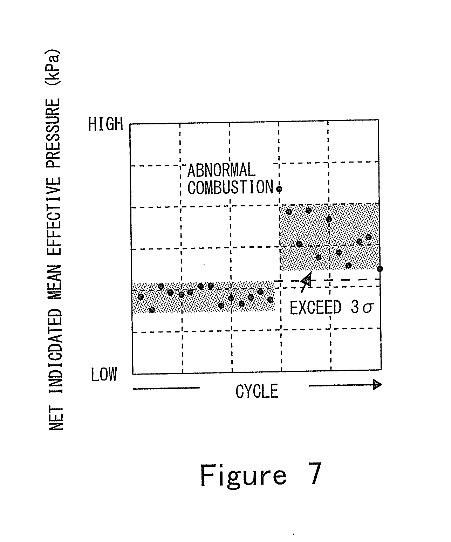

When it is determined that abnormal combustion has occurred in Step S100, the ECU 50 then determines whether an abnormality occurs in the in-cylinder pressure sensor 14 (Step S110). For example, determination is made as described below. Figure 7 illustrates an example of determining whether an abnormality occurs in the in-cylinder pressure sensor 14. When abnormal combustion occurs, as described above, the shift (the offset 52, the difference 58 in inclination) occurs in the output value of the in-cylinder pressure sensor 14. Thus, the ECU 50 determines that an abnormality occurs in the in-cylinder pressure sensor 14 when net indicated mean effective pressure NMEP exceeds a reference value by $+3\sigma$. When it is determined that an abnormality does not occur in the in-cylinder pressure sensor 14, then the processes in this routine are finished.

In Step S 110, when it is determined that an abnormality occurs in the in-cylinder pressure sensor 14, then, the ECU 50 temporarily prohibits parameter control based on the output value of the in-cylinder pressure sensor 14 (Step S120). Specifically, the ECU 50 prohibits ignition timing control or air/fuel ratio feedback control using the output value of the in-cylinder pressure sensor as one of input parameters.

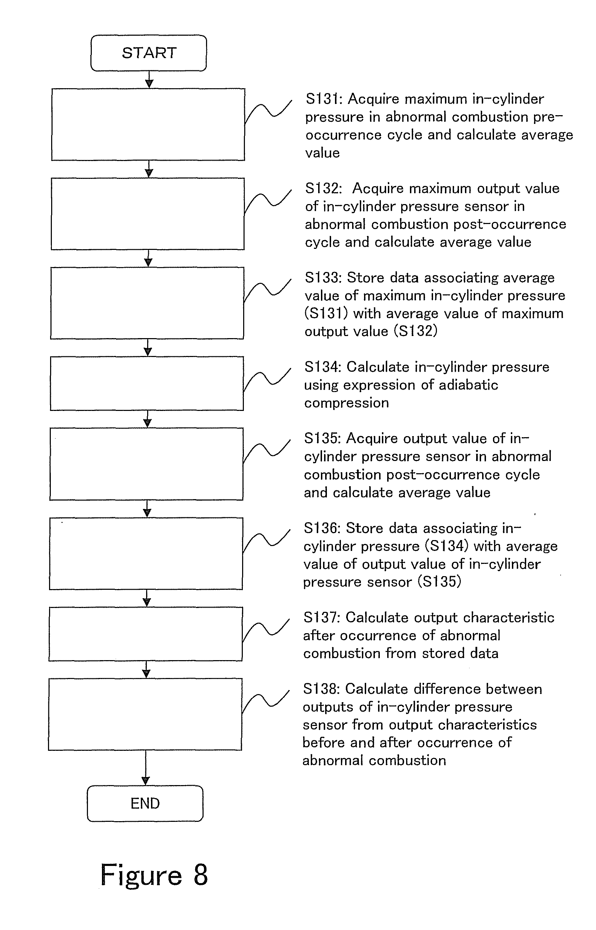

In Step S130, the ECU 50 calculates the above described output correction amount 64 (Figure 3). Specifically, in Step S 130, a sub-routine shown in Figure 8 is executed to calculate the output correction amount 64.

Figure 8 is a flowchart of the sub-routine executed by the ECU 50 in Step S130. In the sub-routine shown in Figure 8, first in Step S131, the ECU 50 calculates estimated in-cylinder pressure in the high pressure region in the abnormal combustion post-occurrence cycle. Specifically, the ECU 50 calculates an average value of the maximum in-cylinder pressure Pmax in the abnormal combustion pre-occurrence cycle as the estimated in-cylinder pressure.

The ECU 50 executes a process of storing maximum in-cylinder pressure Pmax in a past predetermined number of cycles by a different independent routine. The maximum in-cylinder pressure Pmax is in-cylinder pressure calculated according to a maximum output value of the in-cylinder pressure sensor 14 in each cycle from the output characteristic 60 before occurrence of abnormal combustion. The ECU 50 acquires the maximum in-cylinder pressure Pmax in the abnormal combustion pre-occurrence cycle and calculates an average value thereof. The ECU 50 uses the average value of the maximum in-cylinder pressure as the estimated in-cylinder pressure in the high pressure region in the abnormal combustion post-occurrence cycle.

In Step S132, the ECU 50 acquires a maximum output value of the in-cylinder pressure sensor 14 in the abnormal combustion post-occurrence cycle. The ECU 50 calculates an average value of the maximum output value in a predetermined number of cycles.

In Step S133, the ECU 50 stores data on the high pressure region associating the estimated in-cylinder pressure (average value of the maximum in-cylinder pressure Pmax) calculated in Step S131 with the average value of the maximum output value calculated in Step S 132.

In Step S 134, the ECU 50 calculates in-cylinder pressure at a predetermined crank angle CA in the compression stroke using the above described expression (1) of adiabatic compression. The calculation method is as described above with reference to Figure 4, and thus descriptions thereof will be omitted here. The ECU 50 calculates the in-cylinder pressure as estimated in-cylinder pressure in the abnormal combustion post-occurrence cycle.

In Step S 13 5, the ECU 50 acquires an output value of the in-cylinder pressure sensor 14 at the crank angle CA at which the estimated in-cylinder pressure is calculated in Step S134. The ECU 50 calculates an average value of the output value in a predetermined number of cycles.

In Step S136, the ECU 50 stores data on the low pressure region associating the estimated in-cylinder pressure calculated in Step S134 with the average value of the output value calculated in Step S135.

In Step S137, the ECU 50 calculates the output characteristic 62 after occurrence of abnormal combustion (Figure 3) from the data stored in Steps S133 and S136. The output characteristic 62 after occurrence of abnormal combustion is represented by, for example, an approximate line of a linear function. In calculation of the output characteristic 62 after occurrence of abnormal combustion, the shift in the output value caused by the above described offset 52 (Figure 24) is also corrected. Specifically, the intake pipe pressure detected by the intake pipe pressure sensor 31 at the bottom dead center in the intake stroke is considered as in-cylinder pressure at the bottom dead center to correct a difference between the intake pipe pressure and the in-cylinder pressure detected by the in-cylinder pressure sensor 14.

In Step S 138, the ECU 50 calculates the difference between outputs of the in-cylinder pressure sensor 14 from the output characteristic 60 before occurrence of abnormal combustion and the output characteristic 62 after occurrence of abnormal combustion. The difference between outputs can be calculated based on a difference between inclinations of the output characteristics 60 and 62 and the output value of the in-cylinder pressure sensor 14 in the abnormal combustion post-occurrence cycle. The output characteristic 60 before occurrence of abnormal combustion (Figure 3) is previously stored in the ECU 50.

After the process in Step S138, the process returns to Step S130 in the main routine (Figure 5). The ECU 50 calculates the difference between outputs calculated in Step S138 as the output correction amount 64 (Figure 3).

Then, in Step S 140, the ECU 50 corrects the output value of the in-cylinder pressure sensor 14 in the abnormal combustion post-occurrence cycle. Specifically, as shown in Figure 3, the ECU 50 corrects the output value (for example, output value A) of the in-cylinder pressure sensor 14 in the abnormal combustion post-occurrence cycle using the output correction amount 64 calculated in Step S130 (Figure 3). Thus, the output value of the in-cylinder pressure sensor 14 is calibrated.

In Step S 150, the ECU 50 returns various kinds of control temporarily prohibited in Step S120. Then, in a different routine, the various kinds of control are performed based on the output value of the in-cylinder pressure sensor 14 after calibration.

As described above, according to the routine shown in Figures 5 and 8, when the operation state is constant before and after occurrence of abnormal combustion, the output characteristic 62 after occurrence of abnormal combustion can be calculated with high accuracy. Then, the output value of the in-cylinder pressure sensor 14 in the abnormal combustion post-occurrence cycle can be calibrated based on the difference between outputs of the output characteristics 60 and 62.

Thus, according to the system of this embodiment, even in the case where a shift occurs in the output value of the in-cylinder pressure sensor 14 for a predetermined time period after occurrence of abnormal combustion, the shift in the output value can be corrected. Thus, various kinds of control can be favorably continued during the time period, thereby preventing a reduction in fuel efficiency and drivability.

In the system of Embodiment 1 described above, the output characteristic 62 after occurrence of abnormal combustion is calculated from the data on the high pressure region and the data on the low pressure region. However, the calculation method is not limited to this. The output characteristic 62 after occurrence of abnormal combustion may be calculated from one of the data on the high pressure region (Steps S131 to S133) and the data on the low pressure region (Steps S 134 to S136). This applies to embodiments described later.

In the system of Embodiment 1 described above, the output characteristic 62 after occurrence of abnormal combustion is calculated from one piece of data acquired in each of the high pressure region and the low pressure region. However, the calculation method is not limited to this. A plurality of pieces of data may be acquired in each region to calculate the output characteristic 62 after occurrence of abnormal combustion. This applies to the embodiments described later.

In the system of Embodiment 1 described above, the output correction amount 64 is calculated based on the difference between outputs of the output characteristics 60 and 62. However, the calculation method is not limited to this. As shown in Figure 23 above, the shift in the output value of the in-cylinder pressure sensor 14 is eliminated with passage of cycles after occurrence of abnormal combustion. In this view, in calculation of the output correction amount 64, a time constant may be included for converging the output correction amount to 0 after passage of a predetermined number of cycles. This applies to the embodiments described later.

In the system of Embodiment 1 described above, the in-cylinder pressure sensor 14 is provided in each cylinder. However, the present invention may be applied to a system including the in-cylinder pressure sensor 14 only in one cylinder. This applies to Embodiments 2 and 3.

The system of Embodiment 1 described above includes the supercharger 24. However, the present invention may be applied to a system that does not include the supercharger 24. This applies to the embodiments described later.

In Embodiment 1 described above, the in-cylinder pressure sensor 14 corresponds to "in-cylinder pressure sensor" in the first aspect, the output characteristic 60 before occurrence of abnormal combustion corresponds to "pre-occurrence output characteristic" in the first aspect, the output characteristic 62 after occurrence of abnormal combustion corresponds to "post-occurrence output characteristic" in the first aspect, and the ECU 50 corresponds to "pre-occurrence output characteristic storage means" in the first aspect and "maximum in-cylinder pressure storage means" in the second aspect.

Here, the ECU 50 executes the process in Step S 131 or S 134 to achieve "estimated in-cylinder pressure acquiring means" in the first aspect, the ECU 50 executes the process in Step S137 to achieve "post-occurrence output characteristic calculation means" in the first and fourth aspects, the ECU 50 executes the processes in Step S138 and Step S140 to achieve "sensor output value calibration means" in the first aspect, the ECU 50 executes the process in Step 131 to achieve "stationary time estimated in-cylinder pressure acquiring means" in the second aspect, and the ECU 50 executes the process in Step S 134 to achieve "low pressure time estimated in-cylinder pressure acquiring means" in the fourth aspect.

Embodiment 2

{System Configuration in Embodiment 2}

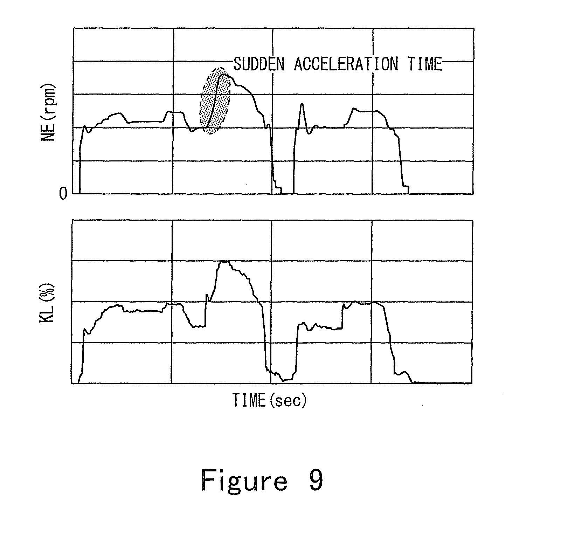

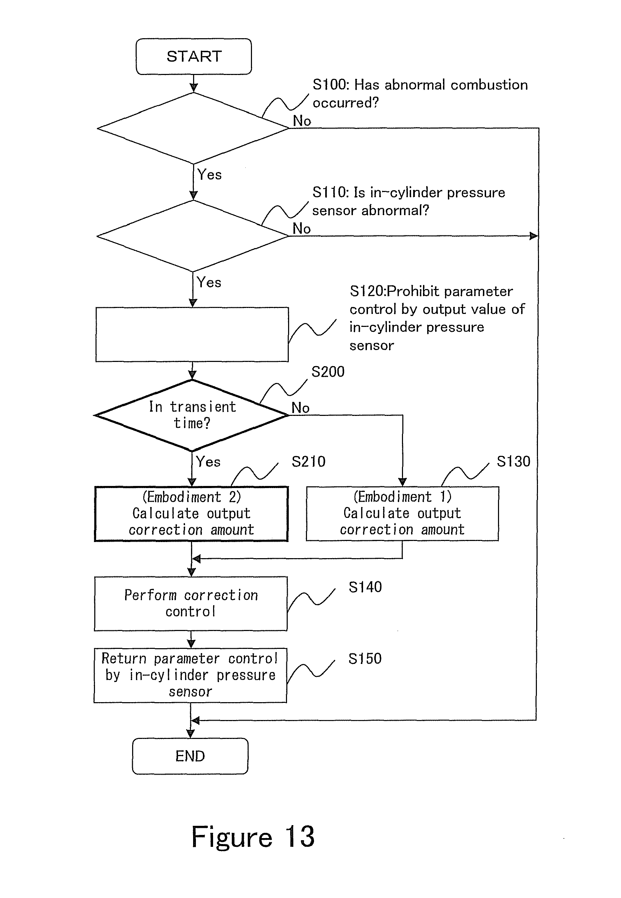

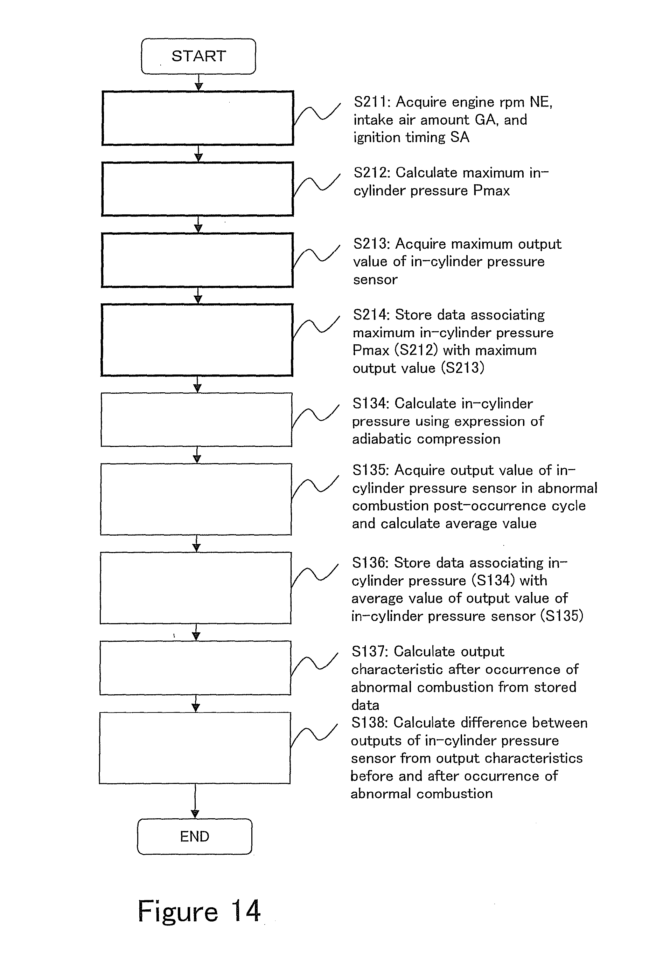

Next, with reference to Figures 9 to 14, Embodiment 2 of the present invention will be described. A system of this embodiment can be achieved by an ECU 50 executing routines in Figures 13 and 14 described later in the configuration shown in Figure 2.

In Embodiment 1 described above, when the operation state is constant before and after occurrence of abnormal combustion, the average value of the maximum in-cylinder pressure Pmax in the abnormal combustion pre-occurrence cycle is used as the estimated in-cylinder pressure in the abnormal combustion post-occurrence cycle. However, this is not always optimum in a transient time.

Figure 9 shows a relationship between an engine rpm NE and a load rate KL in a transient time. As shown in Figure 9, fluctuations in an intake air amount GA (the intake air amount GA correlates with the load rate KL) increase in a transient time such as sudden acceleration. This increases fluctuations in in-cylinder pressure, and a sufficient number of samples for calculating an average value in a constant operation state cannot be obtained. This may reduce calculation accuracy of estimated in-cylinder pressure in a high pressure region.

[Characteristic Control in Embodiment 2]

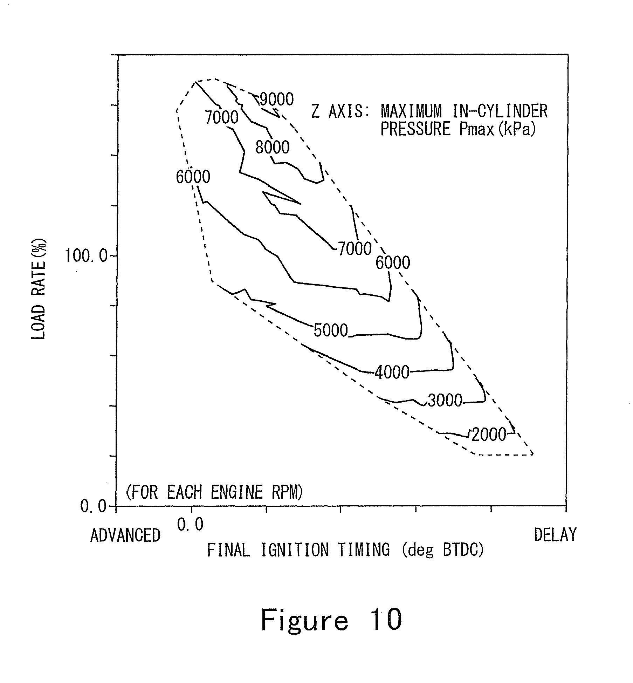

With reference to Figures 10 to 12, an outline of control in this embodiment to solve such a problem will be described. Figure 10 is a relationship map showing a relationship between the load rate KL, ignition timing SA, and maximum in-cylinder pressure Pmax for each engine rpm NE. As shown in Figure 10, the maximum in-cylinder pressure Pmax is determined by the load rate KL and the ignition timing SA at a predetermined engine rpm NE. The relationship map in Figure 10 can be used to estimate the maximum in-cylinder pressure Pmax from the engine rpm NE, the load rate KL, and the ignition timing SA with high accuracy even under a situation where a sufficient number of samples cannot be obtained.

Thus, in the system of this embodiment, the maximum in-cylinder pressure Pmax corresponding to the engine rpm NE, the load rate KL, and the ignition timing SA is calculated from the relationship map in Figure 10 in the transient time, and used as estimated in-cylinder pressure in the high pressure region in the abnormal combustion post-occurrence cycle. Then, the estimated in-cylinder pressure in the high pressure region is used to calculate an output characteristic 62 after occurrence of abnormal combustion.

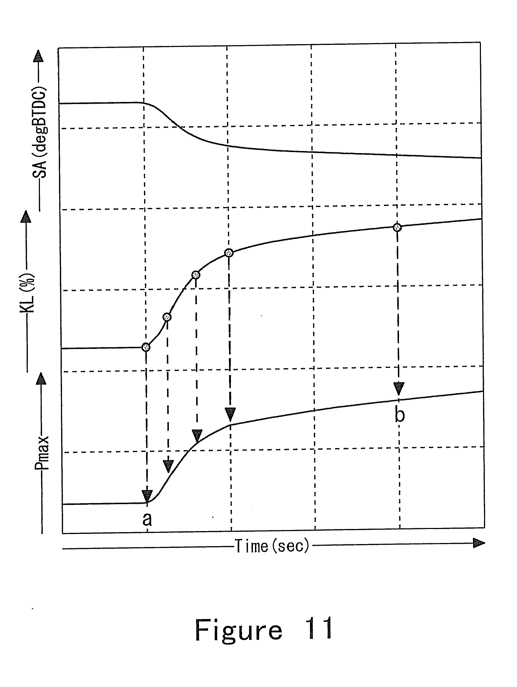

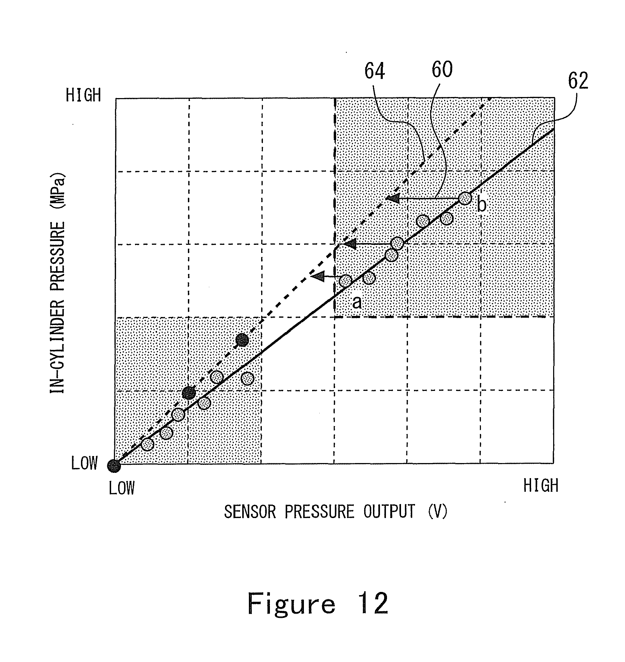

Next, with reference to Figures 11 and 12, a specific example, of calculating the output characteristic 62 after occurrence of abnormal combustion in the transient time will be described. Figure 11 shows a change in the maximum in-cylinder pressure Pmax when the ignition timing SA and the load rate KL are changed. Figure 12 illustrates control to calculate the output characteristic 62 after occurrence of abnormal combustion using the maximum in-cylinder pressure Pmax shown in Figure 11 as the estimated in-cylinder pressure in the high pressure region to correct a shift in an output value of an in-cylinder pressure sensor 14.

As shown in Figure 11, the maximum in-cylinder pressure Pmax changes with changes in the ignition timing SA and the load rate KL. The maximum in-cylinder pressure Pmax is calculated from the relationship map in Figure 10 described above. Positions a and b in Figure 11 correspond to positions a and b in Figure 12. Data associating maximum in-cylinder pressure Pmax corresponding to an operation state at the position a with an output value of the in-cylinder pressure sensor 14 in the operation state at the position a is stored in a relationship map in Figure 12 (position a). Further, data associating maximum in-cylinder pressure Pmax corresponding to an operation state at the position b with an output value of the in-cylinder pressure sensor 14 in the operation state at the position b is stored in the relationship map in Figure 12 (position b).

As such, a plurality of pieces of data on the high pressure region can be stored to increase calculation accuracy of the output characteristic 62 after occurrence of abnormal combustion.

Data on a low pressure region can be obtained using the expression (1) of adiabatic compression as in Embodiment 1 described above. This is the same as in Embodiment 1, and descriptions thereof will be omitted here.

Then, the output characteristic 62 after occurrence of abnormal combustion is calculated from the data on the low pressure region and the data on the high pressure region stored in the relationship map in Figure 12. The output characteristic 62 after occurrence of abnormal combustion is represented by, for example, an approximate line of a linear function.

A difference between outputs of the in-cylinder pressure sensor 14 before and after occurrence of abnormal combustion can be calculated from an output characteristic 60 before occurrence of abnormal combustion and the output characteristic 62 after occurrence of abnormal combustion. The difference between outputs is used as an output correction amount 64 (Figure 12), and an output value A (Figure 12) of the in-cylinder pressure sensor 14 in the abnormal combustion post-occurrence cycle can be calibrated to an output value B (Figure 12) of the in-cylinder pressure sensor 14 in the abnormal combustion pre-occurrence cycle.

As such, even when abnormal combustion occurs in the transient time, the output characteristic 62 after occurrence of abnormal combustion can be calculated with high accuracy. Thus, in the system of this embodiment, a shift in an output value of the in-cylinder pressure sensor 14 caused by abnormal combustion can be corrected from the output characteristic 60 before occurrence of abnormal combustion and the output characteristic 62 after occurrence of abnormal combustion.

{Control Routine}

Figure 13 is a flowchart of a control routine executed by the ECU 50 in order to achieve the above described operation. This routine is the same as the routine in Figure 5 except that processes in Steps S200 to S210 are added after the process in Step S120. In Figure 13, the same steps as shown in Figure 5 are denoted by the same reference numerals, and descriptions thereof will be omitted or simplified.

In the routine in Figure 13, in Step S200, the ECU 50 determines whether the system is in a transient time or not. Specifically, the ECU 50 determines that the system is in the transient time when an amount of change ΔNE of the engine rpm NE is larger than a predetermined determination value. When it is determined that the system is not in the transient time, the processes in Step S130 and thereafter in Embodiment 1 described above are executed.

When it is determined that the system is in the transient time, in Step S210, the ECU 50 calculates the above described output correction amount 64 (Figure 12). Specifically, in Step S210, a sub-routine shown in Figure 14 is executed to calculate the output correction amount 64.

Figure 14 is a flowchart of a sub-routine executed by the ECU 50 in Step S210. In the sub-routine shown in Figure 14, first in Step S211, the ECU 50 acquires an engine rpm NE, an intake air amount GA, and ignition timing SA. The ECU 50 also calculates a load rate KL correlating with the intake air amount GA.

In Step S212, the ECU 50 calculates estimated in-cylinder pressure in the high pressure region in the abnormal combustion post-occurrence cycle. Specifically, the ECU 50 stores a relationship map shown in Figure 10 for each engine rpm NE. The ECU 50 calculates maximum in-cylinder pressure Pmax according to an operation state (the engine rpm NE, the load rate KL, and the ignition timing SA) from the relationship map in Figure 10. The ECU 50 uses the maximum in-cylinder pressure Pmax as the estimated in-cylinder pressure in the high pressure region in the abnormal combustion post-occurrence cycle.

In Step S213, the ECU 50 acquires a maximum output value of the in-cylinder pressure sensor 14 in the abnormal combustion post-occurrence cycle. The ECU 50 detects a maximum output value of the in-cylinder pressure sensor 14 in the operation state in Step S212.

In Step S214, the ECU 50 stores data on the high pressure region associating the estimated in-cylinder pressure (maximum in-cylinder pressure Pmax) calculated in Step S212 with the maximum output value acquired in Step S213. The processes in Steps S211 to S214 are desirably executed a plurality of times. A plurality of pieces of data on the high pressure region can be stored to increase calculation accuracy of the output characteristic 62 after occurrence of abnormal combustion.

After the process in Step S214, the ECU 50 executes the processes in Steps S134 to S138 in Figure 8 described above. The ECU 50 stores the data on the low pressure region in Steps S134 to S136, and calculates, in Step S137, the output characteristic 62 after occurrence of abnormal combustion (Figure 12) from the data stored in Steps S214 and S136. Then, in Step S138, the ECU 50 calculates a difference between outputs of the in-cylinder pressure sensor 14 from the output characteristic 60 before occurrence of abnormal combustion and the output characteristic 62 after occurrence of abnormal combustion. The details of the processes are the same as in Figure 8 described above, and thus descriptions thereof will be omitted here.

After the process in Step S 13 8, the process returns to Step S210 in the main routine. The ECU 50 calculates the difference between outputs calculated in Step S138 as the output correction amount 64 (Figure 12).

Then, the processes in Step S140 and thereafter are executed. The output value of the in-cylinder pressure sensor 14 is calibrated, and various kinds of control are performed based on the calibrated output value of the in-cylinder pressure sensor 14.

As described above, according to the routines shown in Figures 13 and 14, the output characteristic 62 after occurrence of abnormal combustion can be calculated with high accuracy even in the transient time. In particular, the relationship map shown in Figure 10 can be used to calculate a plurality of pieces of data on the high pressure region for each operation state that changes in the transient time. Thus, the output characteristic 62 after occurrence of abnormal combustion can be calculated with the same accuracy as in Embodiment 1 in a stationary time. Then, based on the difference between outputs of the output characteristics 60 and 62, the output value of the in-cylinder pressure sensor 14 in the abnormal combustion post-occurrence cycle can be calibrated.

Thus, according to the system in this embodiment, even in the case where a shift occurs in the output value of the in-cylinder pressure sensor 14 for a predetermined time period after occurrence of abnormal combustion, the shift in the output value can be corrected. Thus, various kinds of control can be favorably continued during the time period, thereby preventing a reduction in fuel efficiency and drivability.

In the system in Embodiment 2 described above, the output characteristic 62 after occurrence of abnormal combustion is calculated from the data on the high pressure region and the data on the low pressure region. However, the calculation method is not limited to this. The output characteristic 62 after occurrence of abnormal combustion may be calculated from one of the data on the high pressure region (Steps S211 to S214) and the data on the low pressure region (Steps S134 to S136). This applies to the embodiments described later.

In Embodiment 2 described above, the ECU 50 corresponds to "relationship storage means" in the third aspect. Here, the ECU 50 executes the processes in Steps 211 to S1212 to achieve "transient time estimated in-cylinder pressure acquiring means" in the third aspect, and the ECU 50 executes the process in Step S134 to achieve "low pressure time estimated in-cylinder pressure acquiring means" in the fourth aspect.

Embodiment 3

{System Configuration in Embodiment 3}

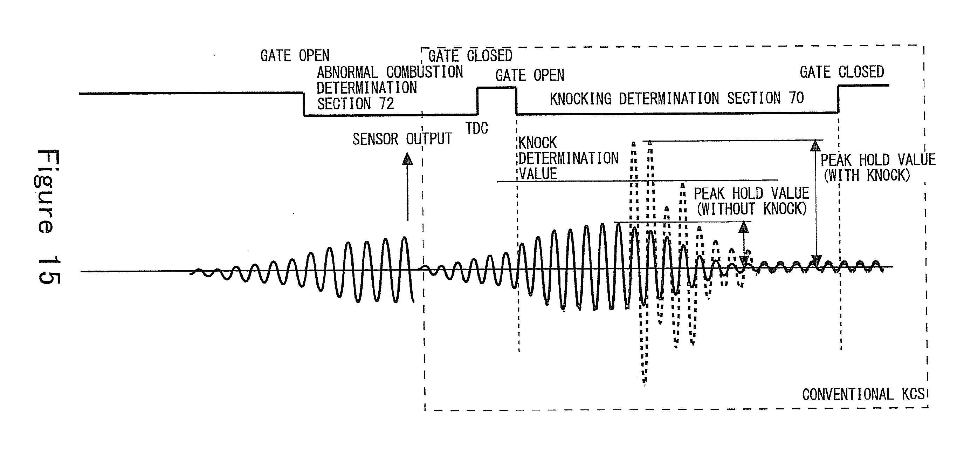

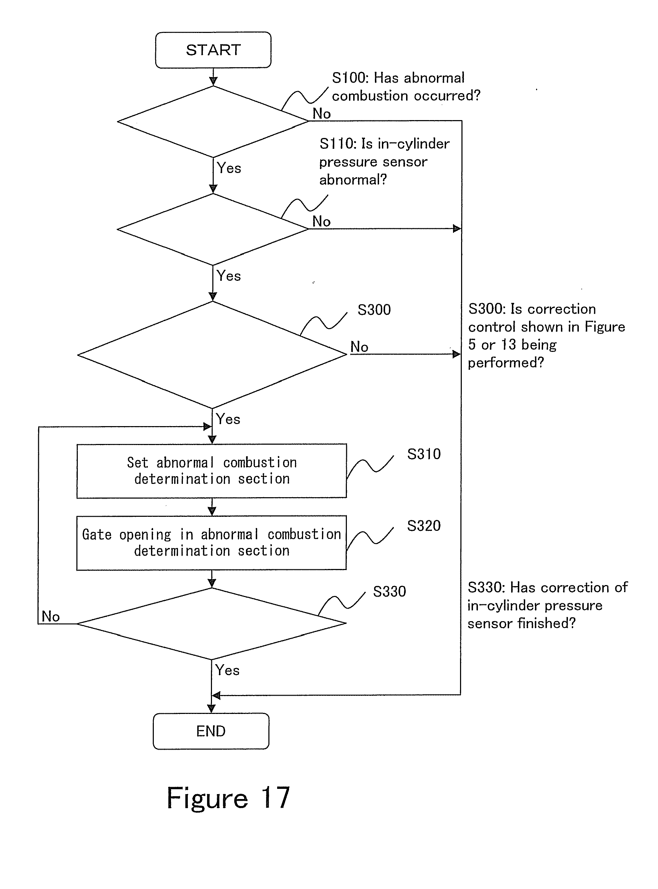

Next, with reference to Figures 15 to 17, Embodiment 3 of the present invention will be described. A system of this embodiment can be achieved by an ECU 50 executing a routine in Figure 17 described later in the configuration shown in Figure 2. An engine 10 shown in Figure 2 includes at least one knock sensor 36 in a cylinder block. The knock sensor 36 is connected to an input portion of the ECU 50.

In Embodiments 1 and 2 described above, the output characteristic 62 after occurrence of abnormal combustion can be calculated with high accuracy. Thus, the shift in the output value of the in-cylinder pressure sensor 14 that occurs for a predetermined time period after occurrence of abnormal combustion can be corrected. However, the output characteristic 62 after occurrence of abnormal combustion is an output characteristic within a range of normal combustion after occurrence of abnormal combustion, and does not include an output characteristic within a range of abnormal combustion.

However, further abnormal combustion may occur in the time period when the shift occurs in the output value of the in-cylinder pressure sensor 14. As described above, in this time period, it is difficult for the in-cylinder pressure sensor 14 to detect occurrence of abnormal combustion with high accuracy. Thus, it is desired that abnormal combustion can be detected with high accuracy by a method other than a method using the output value of the in-cylinder pressure sensor 14.

[Characteristic Control in Embodiment 3]

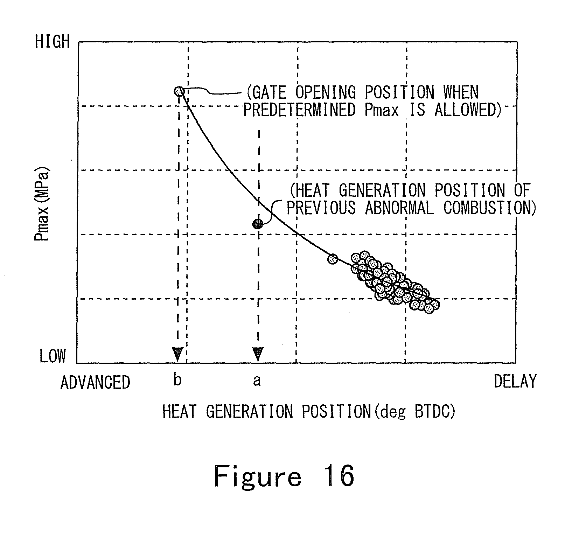

With reference to Figures 15 and 16, an outline of control in this embodiment to solve such a problem will be described. Figure 15 illustrates a knock control system (KCS) used in the system of this embodiment. The KCS can determine whether knocking has occurred. In knocking determination, a knocking determination section 70 (gate) is set as timing of occurrence of knocking in order to avoid false detection by noise. The nocking determination section is, for example, from after ignition to several ten degrees ATDC. The knock sensor 36 converts vibration by a knock transferred to a cylinder block into an electric signal, and determines that knocking occurs when an amplitude is equal to or larger than a knock determination value.

The knock sensor 36 can detect vibration transferred to the cylinder block due to abnormal combustion. Abnormal combustion caused by pre-ignition or inflow of oil into a cylinder occurs before ignition by an ignition plug 16. Thus, in the system of this embodiment, an abnormal combustion determination section 72 including a crank angle at which abnormal combustion occurs is set separately from the knocking determination section 70. The abnormal combustion determination section 72 can be provided to detect abnormal combustion even in a time period when the shift occurs in the output value of the in-cylinder pressure sensor 14.

Next, setting of a gate opening position of the abnormal combustion determination section 72 will be described. Figure 16 shows a relationship between a heat generation position and maximum in-cylinder pressure Pmax. As the gate opening position, a heat generation position a where previous abnormal combustion occurs can be set. This can simplify setting of the gate opening position.

Meanwhile, next abnormal combustion may occur in a position further advanced from the previous abnormal combustion. In this view, a heat generation position b corresponding to maximum in-cylinder pressure Pmax allowed in design of the engine 10 may be favorably set as the gate opening position. This can ensure a wide abnormal combustion determination section 72.

{Control Routine}

Figure 17 is a flowchart of a control routine executed by the ECU 50 in order to achieve the above described operation. This routine is the same as the routine in Figure 5 except that processes in Steps S300 to S210 are added after the process in Step S 110. In Figure 17, the same steps as shown in Figure 5 are denoted by the same reference numerals, and descriptions thereof will be omitted or simplified.

In the routine shown in Figure 17, in Step S300, the ECU 50 determines whether the shift in the output value of the in-cylinder pressure sensor 14 is being corrected by the control routine in Figure 5 or 13 described above. When the shift in the output value is not being corrected, then the processes in this routine are finished.

When the shift in the output value is being corrected, in Step S310, the ECU 50 sets the abnormal combustion determination section 72. The gate opening position (crank angle) of the abnormal combustion determination section 72 is, for example, set in the heat generation position a (Figure 16) where the previous abnormal combustion occurs. As another example, the gate opening position is set to the heat generation position b (Figure 16) corresponding to the maximum in-cylinder pressure Pmax allowed in design of the engine 10. A gate closing position (crank angle) of the abnormal combustion determination section 72 is, for example, set to TDC.

In Step S320, the ECU 50 executes gate opening in the abnormal combustion determination section 72. When a detection value detected by the knock sensor 36 is equal to or larger than an abnormal combustion determination value in this determination section, it is determined that abnormal combustion occurs.

In Step S330, the ECU 50 determines whether the control (Figures 5 and 13) to correct the shift in the output value of the in-cylinder pressure sensor 14 has finished. When it is determined that the control has not yet finished, the process returns to Step S310, and determination of abnormal combustion using the abnormal combustion determination section is continued. Meanwhile, when it is determined that the control has finished, the shift in the output value of the in-cylinder pressure sensor 14 is converged, and thus the processes in this routine are then finished.

As described above, according to the routine shown in Figure 17, the abnormal combustion determination section can be added separately from the normal knocking determination section, as the determination section of KCS. In the predetermined period after occurrence of abnormal combustion, the shift occurs in the output value of the in-cylinder pressure sensor 14, and it is difficult for the in-cylinder pressure sensor 14 to detect abnormal combustion, but providing the abnormal combustion determination section 72 allows the knock sensor 36 to detect abnormal combustion even in this time period.

In the system in Embodiment 3 described above, the abnormal combustion determination section 72 is set when a determination condition in Step S300 is satisfied. However, a setting condition of the abnormal combustion determination section 72 is not limited to this.

When abnormal combustion occurs, the abnormal combustion determination section 72 may be set irrespective of whether or not the output value of the in-cylinder pressure sensor 14 is being calibrated by the control routine in Figure 5 (Embodiment 1) or Figure 13 (Embodiment 2).

In the system in Embodiment 3 described above, the gate closing position of the abnormal combustion determination section 72 is set to TDC. However, the gate closing position is not limited to this. The gate closing position may be at a front of the gate opening position of the knocking determination section.

In Embodiment 3 described above, the ECU 50 and the knock sensor 36 correspond to "knock control system" in the fifth aspect. Here, the ECU 50 executes the process in Step S310 described above to achieve "abnormal combustion determination section adding means" in the fifth aspect.

Embodiment 4

{System Configuration in Embodiment 4}

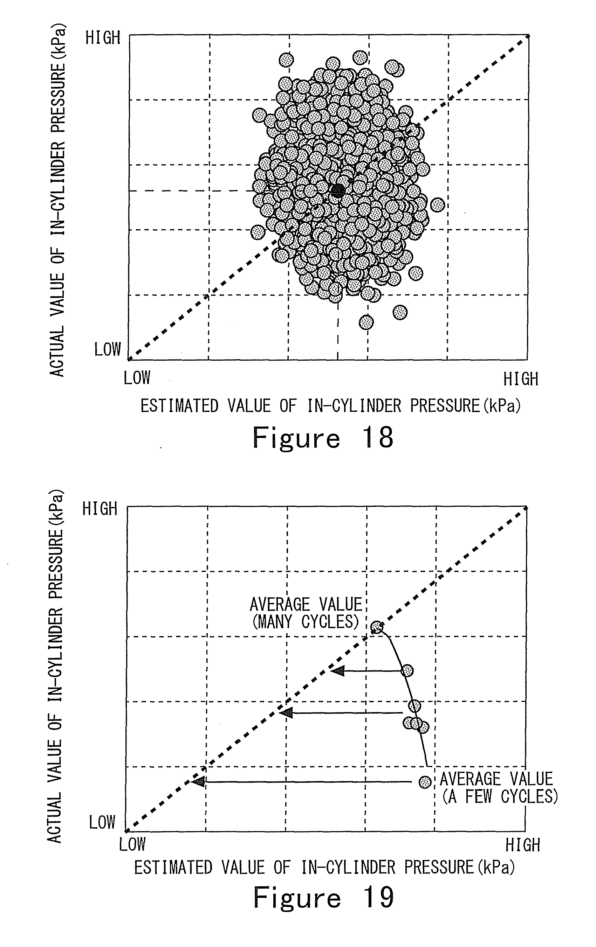

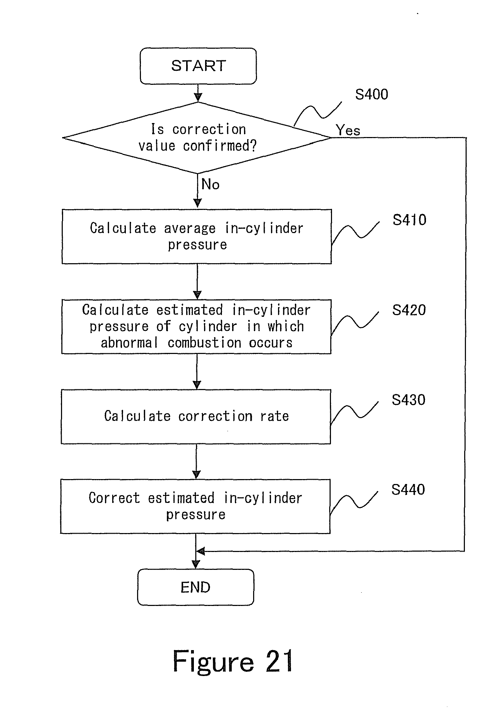

Next, with reference to Figures 18 to 21, Embodiment 4 of the present invention will be described. A system of this embodiment can be achieved by an ECU 50 executing a routine in Figure 21 described later in the configuration shown in Figure 2.

In Embodiments 1 and 2 described above, the output characteristic 62 after occurrence of abnormal combustion can be calculated with high accuracy. The shift in the output value of the in-cylinder pressure sensor 14 can be corrected based on the output characteristic 60 before occurrence of abnormal combustion and the output characteristic 62 after occurrence of abnormal combustion. There is a possibility that a proper output characteristic 62 after occurrence of abnormal combustion cannot be obtained due to variations of various sensors or actuators. In such a case, the output value of the in-cylinder pressure sensor 14 is preferably calibrated by a different method.

[Characteristic Control in Embodiment 4]

With reference to Figures 18 to 20, an outline of control in this embodiment to solve such a problem will be described. In this embodiment, in-cylinder pressure of a cylinder in which abnormal combustion occurs is estimated from in-cylinder pressure of a cylinder in which abnormal combustion does not occur. Specifically, first, the sum of in-cylinder pressure of all cylinders in an abnormal combustion pre-occurrence cycle is stored. Then, when abnormal combustion occurs in a certain cylinder, in-cylinder pressure of remaining cylinders in which abnormal combustion does not occur can be subtracted from the sum to calculate estimated in-cylinder pressure of the cylinder in which abnormal combustion occurs.

As described above, the output value of the in-cylinder pressure sensor 14 varies due to various factors (such as variations in efficiency of the intercooler 26). Figure 18 illustrates a relationship between an actual value of in-cylinder pressure and an estimated value of in-cylinder pressure. As shown in Figure 18, the output values match at a barycenter although there are variations. Figure 19 shows an error between an average value of actual values and an estimated value of in-cylinder pressure in different numbers of detections (numbers of cycles). As shown in Figure 19, the error between the actual value and the estimated value increases with decreasing number of detections. In order to reduce the error, a larger number of detections are desirably obtained. However, in the transient time, it is difficult to obtain many detection values in the same operation state, and thus the error needs to be corrected separately.

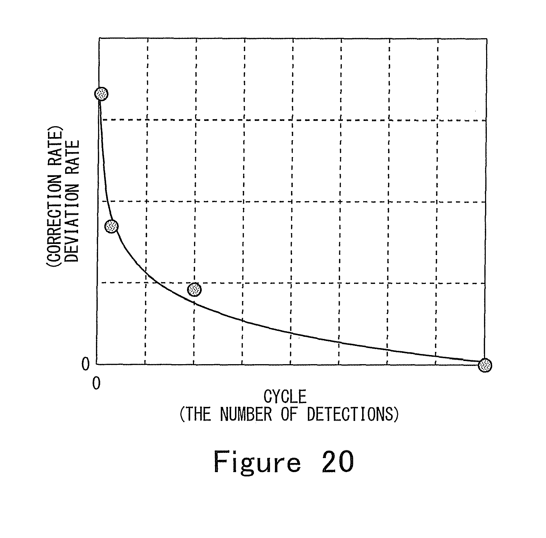

Thus, in the system of this embodiment, the estimated value of the in-cylinder pressure is corrected according to the number of detections. Figure 20 shows a deviation rate between an actual value and an estimated value of in-cylinder pressure according to the number of detections. As shown in Figure 20, since the deviation rate between the actual value and the estimated value increases with decreasing number of detections, the estimated value of the in-cylinder pressure is corrected with a higher correction rate for a higher deviation rate.

{Control Routine}

Figure 21 is a flowchart of a control routine executed by the ECU 50 in order to achieve the above described operation. This routine is executed after the control routine in Figure 5 or 13 described above (Figure 1). In the routine shown in Figure 21, first in Step S400, it is determined whether an output characteristic 62 after occurrence of abnormal combustion within a proper range is obtained by the control routine in Figure 5 or 13. For example, when an inclination of the output characteristic 62 after occurrence of abnormal combustion is deviated from a design value, it is determined that a determination condition in Step S400 is not satisfied. When the determination condition in Step S400 is satisfied, then this routine is finished.

When the determination condition in Step S400 is not satisfied, in Step S410, the ECU 50 calculates average in-cylinder pressure of each cylinder in an abnormal combustion pre-occurrence cycle. Specifically, the ECU 50 executes a process of storing in-cylinder pressure of each cylinder for each operation state by a different independent routine. The ECU 50 calculates the average in-cylinder pressure of each cylinder according to an operation state from data stored in the abnormal combustion pre-occurrence cycle.

In Step S420, the ECU 50 calculates estimated in-cylinder pressure of a cylinder in which abnormal combustion has occurred. Specifically, the ECU 50 first detects in-cylinder pressure in an actual operation state (a change in a throttle opening is within an allowable range) of each cylinder in which abnormal combustion has not yet occurred, and calculates an average value according to the number of detections. The ECU 50 calculates the sum of the average in-cylinder pressure of each cylinder calculated in Step S400. The ECU 50 subtracts in-cylinder pressure of cylinders in which abnormal combustion has not yet occurred from the sum to calculate the estimated in-cylinder pressure of the cylinder in which abnormal combustion has occurred.

In Step S430, the ECU 50 calculates a correction rate according the number of detections in Step S410. A correction map storing a relationship between the number of detections and the correction rate shown in Figure 20 is stored in the ECU 50, and the correction rate according to the number of detections is calculated from the correction map.

In Step S440, the ECU 50 corrects the estimated in-cylinder pressure of the cylinder in which abnormal combustion has occurred based on the correction rate.

As described above, according to the routine shown in Figure 21, estimated in-cylinder pressure of a cylinder in which abnormal combustion has occurred can be calculated from in-cylinder pressure of each cylinder in which abnormal combustion has not yet occurred both in a stationary time and a transient time. This can replace the case where a proper output characteristic 62 after occurrence of abnormal combustion cannot be obtained in Embodiments 1 and 2 described above.

**Claims**

1.  A control apparatus for an internal combustion engine including an in-cylinder pressure sensor, comprising:

    abnormal combustion determination means for determining whether abnormal combustion occurs that increases in-cylinder pressure to a set value or higher;
    pre-occurrence output characteristic storage means for previously storing a pre-occurrence output characteristic indicating a relationship between in-cylinder pressure and an actual output value of the in-cylinder pressure sensor (hereinafter referred to as a sensor output value) in a cycle before occurrence of the abnormal combustion (hereinafter referred to as a pre-occurrence cycle);
    estimated in-cylinder pressure acquiring means for acquiring estimated in-cylinder pressure in a cycle after occurrence of the abnormal combustion (hereinafter referred to as a post-occurrence cycle);
    post-occurrence output characteristic calculation means for calculating a post-occurrence output characteristic from the estimated in-cylinder pressure and the sensor output value in the post-occurrence cycle; and

    sensor output value calibration means for calculating a difference between outputs of the in-cylinder pressure sensor before and after occurrence of the abnormal combustion from the pre-occurrence output characteristic and the post-occurrence output characteristic, and calibrating the sensor output value in the post-occurrence cycle using the difference between outputs.

2.  The control apparatus for an internal combustion engine according to claim 1, wherein the estimated in-cylinder pressure acquiring means further includes

    maximum in-cylinder pressure storage means for acquiring in each cycle, maximum in-cylinder pressure according to a maximum sensor output value from the pre-occurrence output characteristic and storing the pressure, and

    stationary time estimated in-cylinder pressure acquiring means for acquiring the maximum in-cylinder pressure in the pre-occurrence cycle stored in the maximum in-cylinder pressure storage means as the estimated in-cylinder pressure in the post-occurrence cycle when an operation state is constant before and after occurrence of the abnormal combustion.

3.  The control apparatus for an internal combustion engine according to claim 1 or 2, wherein the estimated in-cylinder pressure acquiring means further includes

    relationship storage means for previously storing a correspondence relationship between the operation state and estimated maximum in-cylinder pressure, and

    transient time estimated in-cylinder pressure acquiring means for acquiring, from the correspondence relationship, estimated in-cylinder pressure corresponding to the operation state in the post-occurrence cycle as the estimated in-cylinder pressure in the post-occurrence cycle.

4.  The control apparatus for an internal combustion engine according to claim 2 or 3, wherein the estimated in-cylinder pressure acquiring means further includes low pressure time estimated in-cylinder pressure acquiring means for acquiring in-cylinder pressure calculated using an expression of adiabatic compression in a compression stroke as the estimated in-cylinder pressure in the post-occurrence cycle, and

    the post-occurrence output characteristic calculation means calculates the post-occurrence output characteristic from one or more pieces of data associating the estimated in-cylinder pressure with the sensor output value in the post-occurrence cycle.

**5.** The control apparatus for an internal combustion engine according to any one of claims 1 to 4, wherein the control apparatus further includes a knock control system that determines occurrence of knocking when an amplitude of a vibration sensor is equal to or larger than a knock determination value in a knocking determination time period after ignition, and the knock control system further includes abnormal combustion determination section adding means for adding an abnormal combustion determination section including a crank angle at which the abnormal combustion occurs when the abnormal combustion occurs before ignition.

Figure 1

Figure 2

Figure 3

Figure 4

START

S100: Has abnormal
combustion occurred?

No

Yes

S110: Is in-cylinder
pressure sensor
abnormal?

No

Yes

S120

S120: Prohibit
parameter control by
output value of in-
cylinder pressure
sensor

Calculate output
correction amount

S130

Perform correction
control

S140

S150

S150: Return parameter
control by in-cylinder
pressure sensor

END

Figure 5

Figure 6

Figure 7

Figure 8

Figure 9

Figure 10

Figure 11

Figure 12

START

S100: Has abnormal combustion occurred?

No

Yes

S110: Is in-cylinder pressure sensor abnormal?

No

Yes

S120:Prohibit parameter control by output value of in-cylinder pressure sensor

S200

In transient time?

No

Yes

S210

(Embodiment 2) Calculate output correction amount

S130

(Embodiment 1) Calculate output correction amount

Perform correction control

S140

Return parameter control by in-cylinder pressure sensor

S150

END

# Figure 13

START

S211: Acquire engine rpm NE,
intake air amount GA, and
ignition timing SA

S212: Calculate maximum in-
cylinder pressure Pmax

S213: Acquire maximum output
value of in-cylinder pressure
sensor

S214: Store data associating
maximum in-cylinder pressure
Pmax (S212) with maximum
output value (S213)

S134: Calculate in-cylinder
pressure using expression of
adiabatic compression

S135: Acquire output value of in-
cylinder pressure sensor in abnormal
combustion post-occurrence cycle
and calculate average value

S136: Store data associating in-
cylinder pressure (S134) with
average value of output value of
in-cylinder pressure sensor (S135)

S137: Calculate output
characteristic after occurrence of
abnormal combustion from stored
data

S138: Calculate difference between
outputs of in-cylinder pressure
sensor from output characteristics
before and after occurrence of
abnormal combustion

END

Figure 14

Figure 15

HIGH

Pmax (MPa)

(GATE OPENING POSITION WHEN
PREDETERMINED Pmax IS ALLOWED)

(HEAT GENERATION POSITION OF
PREVIOUS ABNORMAL COMBUSTION)

LOW

ADVANCED     b     a           DELAY

HEAT GENERATION POSITION (deg BTDC)

Figure 16

START

S100: Has abnormal
combustion occurred?

No

Yes

S110: Is in-cylinder
pressure sensor
abnormal?

No

Yes

S300

No

S300: Is correction
control shown in Figure
5 or 13 being
performed?

Yes

Set abnormal combustion
determination section

S310

Gate opening in abnormal combustion
determination section

S320

No

S330

S330: Has correction of
in-cylinder pressure
sensor finished?

Yes

END

Figure 17

Figure 18

Figure 19

Figure 20

START

S400

Is correction
value confirmed?                    Yes

No

Calculate average in-cylinder
pressure                                    S410

Calculate estimated in-cylinder
pressure of cylinder in which
abnormal combustion occurs                  S420

Calculate correction rate                   S430

Correct estimated in-cylinder
pressure                                    S440

END

# Figure 21

Figure 22

Figure 23

Figure 24

EP 2 592 257 A1

Figure 25

38

<table>
<tr><td colspan="2" align="center">**INTERNATIONAL SEARCH REPORT**</td><td>International application No.</td></tr>
<tr><td colspan="2"></td><td>PCT/JP2010/059919</td></tr>
</table>

A. CLASSIFICATION OF SUBJECT MATTER
*F02D45/00*(2006.01)i

According to International Patent Classification (IPC) or to both national classification and IPC

B. FIELDS SEARCHED

Minimum documentation searched (classification system followed by classification symbols)
F02D45/00

Documentation searched other than minimum documentation to the extent that such documents are included in the fields searched

| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-69714 A (Toyota Motor Corp.), 27 March 2008 (27.03.2008), claim 1 & WO 2008/032188 A2 | 1–5 |
| A | JP 1-114733 A (Fuji Heavy Industries Ltd.), 08 May 1989 (08.05.1989), claims (Family: none) | 1–5 |
| A | JP 2004-100566 A (Toyota Motor Corp.), 02 April 2004 (02.04.2004), paragraphs [0017] to [0019] & US 2005/0229903 A1 & EP 1538325 A1 & WO 2004/022959 A1 | 1–5 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 June, 2010 (28.06.10) | 06 July, 2010 (06.07.10) |

| Name and mailing address of the ISA/ Japanese Patent Office | Authorized officer |
|---|---|
| Facsimile No. | Telephone No. |

Form PCT/ISA/210 (second sheet) (July 2009)

**EP 2 592 257 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008069714 A
- JP 2007032531 A
- JP 2008297952 A
- JP 2009229328 A